# FASCICULE DE BREVET EUROPEEN

(11) **EP 0 526 373 B1**
(45) Date de publication et mention de la délivrance du brevet: **06.03.1996**
(21) Numéro de dépôt: 92470021.4
(22) Date de dépôt: 09.07.1992
(51) Int. Cl.: F16L 37/084

(54) **Assemblage verrouillé de tuyaux avec garniture d'étanchéité composite**
Verriegelbare Rohrverbindung mit Abdichtanordnung aus einem Verbundwerkstoff
Locked pipe fitting with composite seal assembly

(30) Priorité: 26.07.1991 FR 9109537
(43) Date de publication de la demande: 03.02.1993
(73) Titulaire: PONT-A-MOUSSON S.A., F-54000 Nancy (FR)
(72) Inventeur: Percebois, Alain, F-54700 Blenod les Pont-A-Mousson (FR); Ory, Jean-Paul, F-54700 Blenod les Pont-A-Mousson (FR); Bucher, Claude, F-54700 Pont-A-Mousson (FR)
(74) Mandataire: Puit, Thierry

(56) Documents cités:
- EP-A- 0 433 202
- DE-A- 2 650 775
- DE-B- 2 226 151

## Description

La présente invention est relative aux assemblages verrouillés entre un bout mâle d'un tuyau et un emboîtement d'un autre tuyau. Elle concerne plus particulièrement un assemblage verrouillé entre un premier tuyau à bout mâle et un second tuyau à emboîtement avec interposition d'une garniture d'étanchéité annulaire entre les deux tuyaux, ladite garniture présentant un axe confondu avec l'axe de l'assemblage et comprenant :
- un corps en matière élastique, comprimé radialement entre l'emboîtement et le bout mâle ;
- un talon d'ancrage en matière élastique, logé dans une gorge d'ancrage de l'emboîtement délimitée par un fond bordé de deux parois de butée, dont une paroi arrière située du côté de l'entrée de l'emboîtement et une paroi avant à peu près radiale située en vis-à-vis de la précédente ;
- et plusieurs inserts de verrouillage en matériau rigide noyés dans le talon et disposés de façon générale suivant des génératrices d'un cône ayant le même axe que la garniture et qui convergent en direction du corps, chaque insert faisant saillie hors de la garniture vers l'axe de celle-ci, la tête ou partie radialement extérieure de chaque insert présentant, du côté du corps, un bec de retenue de l'insert lors de l'enfoncement du bout mâle dans l'emboîtement, ce bec étant à arête vive et étant délimité par deux surfaces dégagées.

Dans les assemblages entre tuyaux utilisant de telles garnitures d'étanchéité, comme c'est par exemple connu de DE-A-2 226 151, chaque insert de verrouillage, en matériau dur, s'arc-boute suivant une certaine inclinaison entre l'emboîtement et le bout mâle. Un tel verrouillage empêche les mouvements axiaux d'un tuyau par rapport à l'autre qui pourraient compromettre la bonne étanchéité du joint et même disjoindre complètement les tuyaux initialement assemblés, sous l'action des forces axiales de séparation engendrées par la pression du fluide contenu dans les tuyaux.

Ce type de verrouillage remplace avantageusement un système coûteux de fixation d'une canalisation sur des fondations ancrées dans le sol, ainsi que les dispositifs à bride et contre-bride boulonnées.

Toutefois, un tel verrouillage n'est pleinement efficace que s'il peut garantir une distance maximale de recul du bout mâle lorsque la pression de fluide est établie. Il faut pour cela être certain que l'introduction à force du bout mâle dans l'emboîtement ne va pas extruder les inserts ou l'ensemble de la garniture vers le fond de l'emboîtement dans l'espace annulaire compris entre celui-ci et le bout mâle.

L'invention a pour but de fournir une solution simple à ce problème, adaptable directement aux tuyaux existants.

A cet effet, l'invention a pour objet un assemblage du type précité, caractérisé en ce que l'arête vive est immédiatement suivie d'une partie radialement intérieure en large arrondi concave qui permet à l'insert, lorsque le bout mâle est introduit à force dans l'emboîtement en comprimant radialement le corps de la garniture et en amenant l'arête vive au contact de la paroi avant avec laquelle elle forme une liaison, de pivoter autour de cette liaison tout en la maintenant, ladite liaison formant une butée franche qui empêche l'insert d'être extrudé hors de la gorge de l'emboîtement.

Suivant d'autres variations :
- les deux surfaces dégagées forment un angle saillant vers le fond de l'emboîtement pour tout diamètre du bout mâle compris dans sa gamme de tolérance et pour toute position d'introduction du bout mâle dans l'emboîtement ;
- ledit angle est nettement inférieur à 90° ;
- ledit angle est légèrement supérieur à 90° ;
- chaque insert présente plusieurs dents d'accrochage sur le bout mâle, décalées axialement et radialement les unes par rapport aux autres ;
- la tête de chaque insert présente, du côté opposé au bec, une surface inclinée radialement vers l'intérieur et axialement vers l'extérieur de l'emboîtement, cette surface se terminant de préférence par des arrondis;
- la garniture comporte, du côté de l'entrée de l'emboîtement, une lèvre d'étanchéité intérieure sensiblement radiale.

L'invention a également pour objet un assemblage verrouillé à bout mâle et emboîtement comprenant une garniture d'étanchéité telle que définie ci-dessus, le corps de la garniture étant comprimé radialement entre l'emboîtement et le bout mâle, son talon étant logé dans une gorge d'ancrage de l'emboîtement délimitée par un fond bordé de deux parois de butée, dont une paroi avant à peu près radiale, la partie radialement intérieure de chaque insert est adapté pour venir en prise de verrouillage sur la périphérie du bout mâle avec sa tête en appui sur le fond de la gorge et éventuellement sur sa paroi de butée située du côté d'entrée de l'emboîtement.

Dans le cas, déjà indiqué, où la tête de chaque insert présente, du côté opposé au bec, une surface inclinée radialement vers l'intérieur et axialement vers l'extérieur de l'emboîtement, cette surface se terminant de préférence par des arrondis, de façon avantageuse, la paroi de butée de l'emboîtement située du côté de son entrée présente une partie radialement extérieure tronconique, de sorte que la tête des inserts prend appui à peu près sur le raccordement de cette partie et du fond de la gorge pour les grands diamètres du bout mâle tandis qu'elle prend appui et sur ce fond et sur la même partie inclinée pour les petits diamètres du bout mâle.

Suivant une autre variation de l'assemblage, l'angle que forme la surface dégagée extérieure avec ladite paroi avant est inférieur à l'angle que forme avec cette dernière l'autre surface dégagée.

Un exemple de réalisation de l'invention va maintenant être décrit en regard des dessins annexés, sur lesquels :
- la Figure 1 est une demi-vue en coupe axiale d'un emboîtement équipé d'une garniture d'étanchéité suivant l'invention et d'un bout mâle prêt à être introduit dans cet emboîtement;
- la Figure 2 est une vue analogue montrant l'assemblage verrouillé résultant;
- les Figures 3 et 4 illustrent à plus grande échelle, également en demi-coupe axiale, le comportement des inserts de la garniture lors de l'introduction du bout mâle, respectivement pour un diamètre maximal et pour un diamètre minimal de ce bout mâle, la partie élastique de la garniture ayant été omise pour la clarté du dessin; et
- les Figures 5 à 8 illustrent de manière analogue le verrouillage de l'assemblage pour des diamètres décroissants du bout mâle.

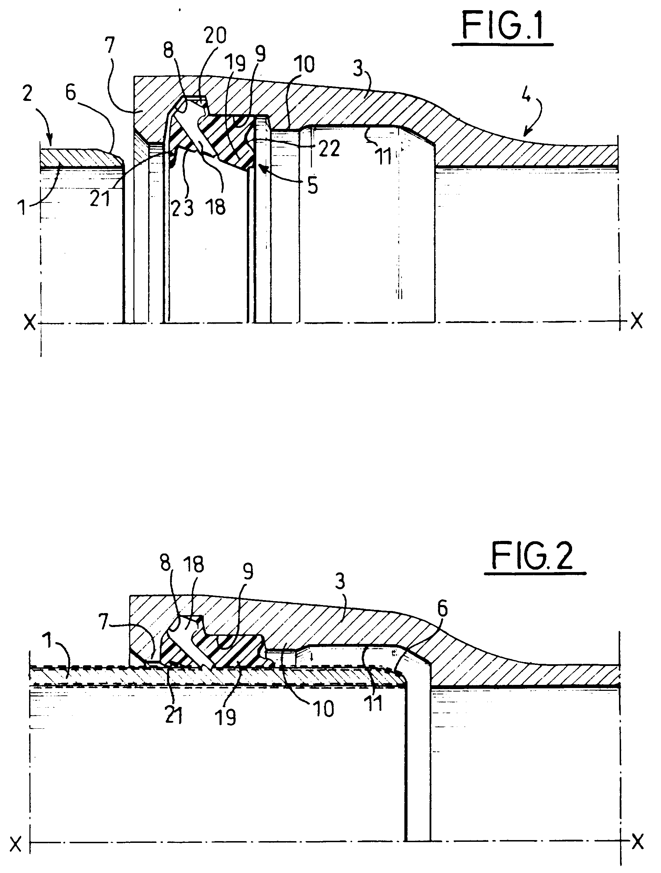

On a représenté à la Figure 1 le bout mâle 1 d'un premier tuyau 2 et l'emboîtement 3 d'un second tuyau 4, cet emboîtement étant équipé d'une garniture d'étanchéité 5. Les trois éléments 1, 3 et 5 sont sensiblement de révolution autour d'un même axe X-X supposé horizontal. Les deux tuyaux sont par exemple en fonte à graphite sphéroïdal.

Le bout mâle 1 présente une surface extérieure cylindrique, chanfreinée extérieurement en 6 à son extrémité.

L'emboîtement 3 comporte une collerette d'entrée 7, puis successivement, de l'arrière vers l'avant, c'est-à-dire en allant de cette collerette vers le fond de l'emboîtement : une gorge d'ancrage 8 relativement profonde, une cavité d'étanchéité 9 moins profonde, une saillie intérieure 10 limitant axialement cette cavité 9, et une cavité avant 11 moins profonde que la cavité 9 et recevant librement l'extrémité du bout mâle 1. Pour un diamètre d'entrée donné de l'emboîtement, les tolérances de fabrication du bout mâle et ses défauts de positionnement (désaxement et déviation angulaire) ont pour résultat que, dans chaque demi-plan de coupe axiale, la génératrice extérieure du bout mâle peut se trouver dans toute une gamme de positions, entre une position correspondant à un jeu radial pratiquement nul par rapport à la collerette 7 et un jeu radial maximal par rapport à cette même collerette. Ceci est équivalent à une gamme de diamètres extérieurs du bout mâle compris entre une valeur maximale et une valeur minimale avec une position parfaitement centrée du bout mâle, et, dans la suite, on se référera uniquement à une telle gamme de diamètres.

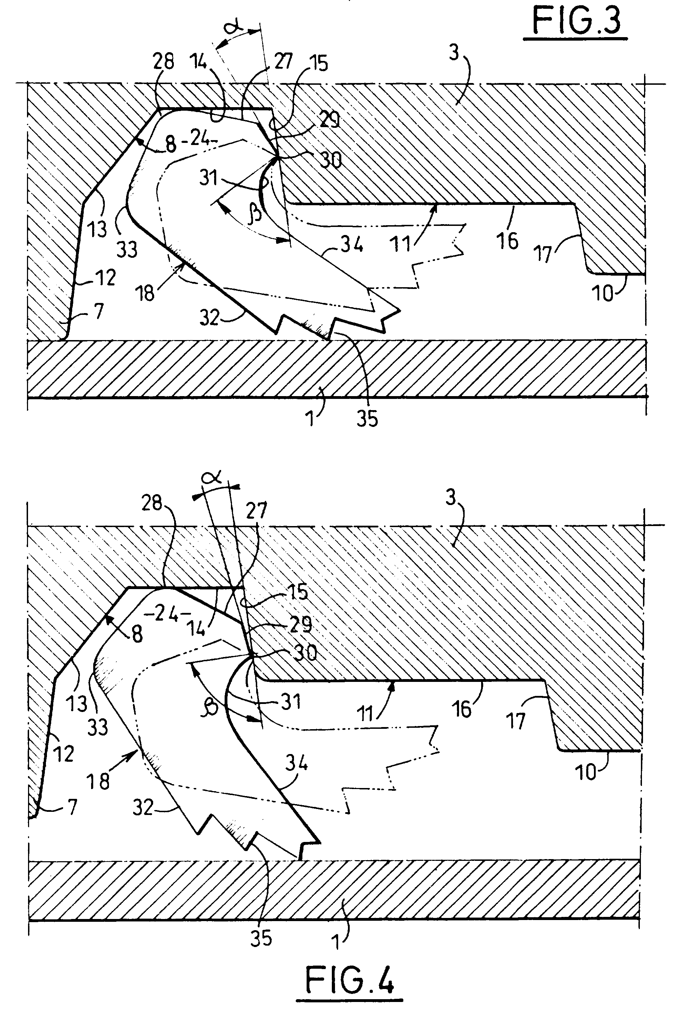

Comme on le voit mieux sur la Figure 3, la gorge 8 de l'emboîtement est délimitée vers l'arrière par une paroi 12 radialement intérieure, faiblement inclinée sur la verticale, et par une paroi 13 radialement extérieure nettement plus inclinée, à peu près à 45° dans l'exemple représenté. La paroi 13 se raccorde au fond cylindrique 14 de la gorge 8, lequel se raccorde à son tour à une paroi avant 15 à peu près radiale de cette gorge. Quant à la cavité 9, elle comporte un fond cylindrique 16 raccordé à la paroi 15, et un épaulement d'extrémité avant 17 à peu radial.

La garniture 5 (Figure 1) est une pièce moulée en matériau souple ou résilient, par exemple en élastomère, dans laquelle sont noyés une série d'inserts de verrouillage 18. Elle comprend à l'avant un corps massif 19, et à l'arrière un talon d'ancrage 20 en saillie radialement vers l'extérieur et une lèvre 21 en saillie radialement vers l'intérieur.

Au repos, les profils arrière et radialement extérieur de la garniture sont sensiblement les mêmes que les profils des surfaces 12 à 16 de l'emboîtement 3. Plus précisément, la garniture se loge sans déformation notable dans l'emboîtement, et il subsiste alors un jeu entre elle et les surfaces 12 à 14 de l'emboîtement, tandis qu'elle s'applique contre les surfaces 15 et 16. Un espace libre subsiste alors entre l'extrémité avant 22, de forme concave, du corps 19 et la surface 17.

Par ailleurs :
- la surface intérieure 23 du corps 19 converge vers l'avant de façon sensiblement conique d'un diamètre voisin du diamètre intérieur de la collerette 7 à un diamètre inférieur au plus petit diamètre extérieur possible du bout mâle 1, au sens indiqué plus haut;
- la lèvre 21 est orientée sensiblement radialement et s'étend à peu près entre les mêmes diamètres que la surface intérieure 23, en prolongeant la surface d'extrémité arrière du corps 19.

Chaque insert 18 (Figures 1, 3 et 4) est contenu dans un plan radial, a une forme générale en L et comporte une tête radialement extérieure 24 noyée dans le talon 20 et une queue radialement intérieure 25 qui converge vers l'avant jusqu'à faire légèrement saillie sur la surface 23 du corps de la garniture, à peu près à mi-longueur de celle-ci.

La tête 24 (Figures 3 et 4) présente une forme générale rectangulaire, avec :
- à l'arrière, un côté 26 qui, au repos, est à peu près parallèle à la surface 13 de l'emboîtement;
- radialement à l'extérieur, un côté 27 à peu prés perpendiculaire au précédent et raccordé à celui-ci par un arrondi 28; et
- à l'avant, un côté en forme de bec, en deux parties : une partie radialement extérieure 29, formant un angle obtus, de l'ordre de 135° dans cet exemple, avec le côté 27, et s'étendant jusqu'à une arête vive 30; et une partie radialement intérieure 31, en large arrondi concave ayant un angle au centre d'environ 90°. La tangente à cet arrondi au niveau de l'arête 30 forme avec la partie 29 du bec un angle légèrement supérieur à 90°. En variante, cet angle pourrait également être nettement inférieur à 90°.

La queue 25 est délimitée latéralement par deux côtés à peu près parallèles : un côté arrière 32 raccordé au côté 26 par un arrondi 33, et un côté avant 34 raccordé tangentiellement à l'arrondi 31. La queue 25 se termine par quatre saillies 35 décalées axialement et radialement les unes par rapport aux autres. Comme on l'expliquera en détail plus loin, les trois saillies 35 situées vers l'arrière constituent des dents d'accrochage sur le bout mâle, tandis que la quatrième saillie 35, située vers l'avant, c'est-à-dire vers le fond de l'emboîtement, constitue un talon anti-pénétration, limitant la pénétration des dents dans le bout mâle.

Lorsque le bout mâle 1 est introduit dans l'emboîtement 3, il replie la lèvre 21 puis pousse vers l'avant le corps 19 en le comprimant radialement. L'ensemble de la garniture a alors tendance à se déplacer vers l'avant. Ceci amène l'arête vive 30 des inserts 18 au contact de la surface 15 de l'emboîtement (Figures 3 et 4), et l'agencement est tel que quel que soit le diamètre extérieur du bout mâle, pendant l'introduction de ce dernier, cette arête 30 fasse toujours saillie vers l'avant sur la tête des inserts et se trouve toujours en regard de la surface 15.

Cette butée franche 30-15 empêche les inserts de glisser radialement vers l'intérieur de l'emboîtement, hors de la chambre, et donc d'être extrudés. Comme l'indiquent les Figures 3 et 4, ce mode de fonctionnement, pourrait se poursuivre jusqu'à la position fictive, c'est-à-dire au-delà de la plage normale de fonctionnement, indiquée en traits mixtes, offrant ainsi une large marge de sécurité.

De plus, pour les plages normales de fonctionnement, c'est-à-dire pour la gamme de diamètres de bout mâle et pour les positions d'emboîtage prévues, et même au-delà, le couple 30-15 se comporte comme un système unidirectionnel augmentant encore la fiabilité de l'ensemble. En effet, l'angle d'incidence α entre les surfaces 29 et 15 reste inférieur à l'angle β entre les surfaces 31 et 15 (Figures 3 et 4), de sorte que l'insert peut aisément pénétrer dans la chambre 8 (vers la surface 14 de l'emboîtement) lorsqu'il est soumis à des efforts radiaux dans cette direction, alors qu'il est bloqué si la direction des efforts radiaux s'inverse.

Il est à noter que la largeur de la queue 25 est inférieure au jeu radial entre la surface 16 et le bout mâle, pour éviter tout risque de coincement du joint. Par ailleurs, on comprend que la butée 30-15 est importante principalement pour les grands diamètres extérieurs du bout mâle, pour lesquels le risque d'entraînement de la garniture est élevé (Figure 3).

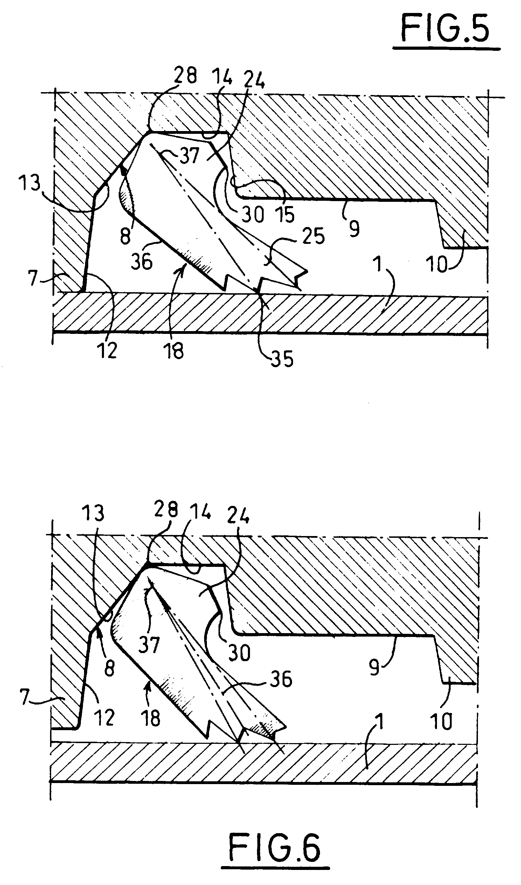

Lorsque l'introduction du bout mâle est terminée et la canalisation mise sous pression, les bouts mâles sont en général sollicités vers l'arrière. Les inserts 18 limitent ce recul de la manière suivante, illustrée aux Figures 5 à 8.

Lorsque le diamètre extérieur du bout mâle est maximal (jeu radial nul entre le bout mâle et la collerette 7 de l'emboîtement), son recul amène l'arrondi 28 de chaque insert à peu près dans l'angle formé par les surfaces 13 et 14 de l'emboîtement, et la seconde dent 35 à partir de l'arrière vient en prise sur le bout mâle. Ceci définit une force d'arc-boutement 36 et un centre de rotation 37 de l'insert. L'agencement est tel que l'inclinaison sur la direction radiale de la force 36 est comprise entre une limite inférieure pour laquelle la dent risque de perforer le bout mâle, et une limite supérieure pour laquelle existerait un risque de glissement de la dent sur le bout mâle.

Pour les diamètres extérieurs du bout mâle décroissants à partir du diamètre maximal (Figure 6), l'appui de la tête des inserts sur l'emboîtement est le même que précédemment, mais les deux dents 35 intermédiaires, puis seulement la troisième dent, viennent en prise sur le bout mâle, ce qui a pour effet de maintenir l'inclinaison de la force d'arc-boutement 36 dans les limites précitées malgré la plus grande inclinaison de la queue des inserts.

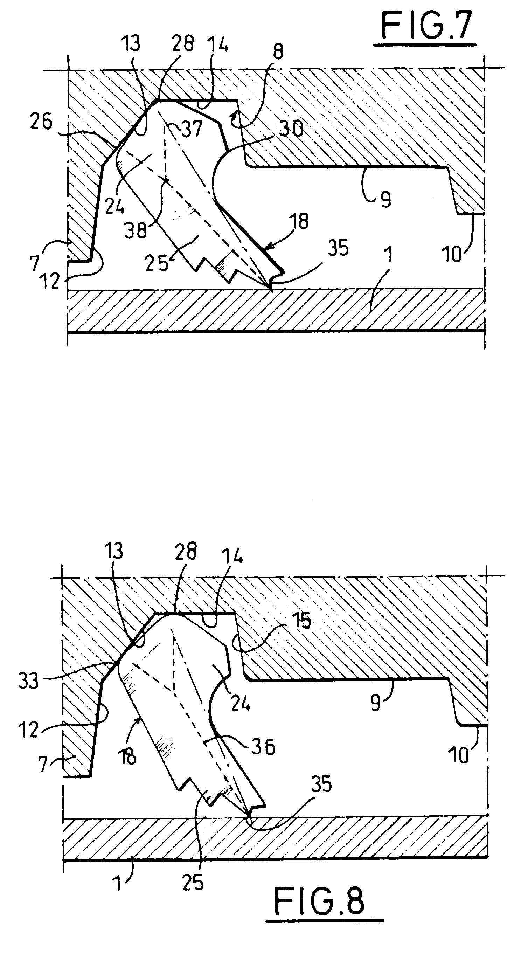

Le diamètre extérieur du bout mâle continuant à décroître, le basculement des inserts se poursuit jusqu'à ce que le côté 26 s'applique sur la surface 13 de l'emboîtement (Figure 7). Le centre de rotation des inserts passe alors du point 37 à un autre point 38 situé plus près de l'axe X-X et plus en arrière, permettant à la force d'arc-boutement de rester dans les limites désirées alors qu'elle en sortirait pour un même diamètre de bout mâle sans ce principe.

Enfin, dans la gamme inférieure des diamètres extérieurs du bout mâle (Figure 8), la troisième dent 35 est toujours en prise sur le bout mâle, et la tête des inserts s'appuie en deux points dans la gorge 8 : par l'arrondi 28 sur le fond 14, et par l'arrondi 33 sur la surface 13. De nouveau, le centre de rotation 38 est situé de façon à garantir une inclinaison appropriée de la force 36.

Ce maintien de l'inclinaison de la force 36 grâce au double appui de la tête des inserts a pour conséquence avantageuse une augmentation de la pression interne admissible dans la canalisation, cette pression étant sensiblement proportionnelle à l'angle que fait la force d'arc-boutement avec la direction radiale. Il est à noter que ceci est obtenu sans faire intervenir de dent supplémentaire des inserts, ce qui permet de réaliser des économies de matière, d'encombrement et de fabrication des inserts.

Dans tous les cas, l'appui de l'arête 30 sur la surface 15 lors de l'emboîtage limite le recul maximal possible du bout mâle lors de la mise en service de la canalisation.

La saillie 35 extrême la plus petite, située du côté de l'entrée de l'emboîtement, est une sécurité destinée aux cas de mauvais positionnement des inserts par rapport à leur position normale. La saillie 35 d'extrémité située vers le fond de l'emboîtement est un talon anti-pénétration qui permet de limiter la pression de contact de la dent intermédiaire voisine sur les bouts mâles présentant les diamètres les plus petits, et permet ainsi d'augmenter le seuil maximum de pression admissible.

La lèvre 21 assure l'étanchéité par rapport aux éléments extérieurs, c 'est-à-dire permet d'éviter l'introduction d'éléments extérieurs agressifs ou corrosifs dans la zone verrouillée. Grâce à son orientation radiale, elle ne risque pas de se positionner sous les inserts lors de l'emboîtage.

Si désiré, les inserts peuvent être revêtus d'une matière électriquement isolante, par exemple d'une céramique.

## Revendications

1. Assemblage verrouillé entre un premier tuyau (2) à bout mâle (1) et un second tuyau (4) à emboîtement (3) avec interposition d'une garniture d'étanchéité (5) annulaire entre les deux tuyaux, ladite garniture (5) présentant un axe (X-X) confondu avec l'axe de l'assemblage et comprenant :
- un corps (19) en matière élastique, comprimé radialement entre l'emboîtement (3) et le bout mâle (1) ;
- un talon d'ancrage (20) en matière élastique, logé dans une gorge d'ancrage (8) de l'emboîtement délimitée par un fond (14) bordé de deux parois de butée (12-13, 15), dont une paroi arrière (12-13) située du côté de l'entrée de l'emboîtement (3) et une paroi avant (15) à peu près radiale située en vis à vis de la précédente ;
- et plusieurs inserts de verrouillage (18) en matériau rigide noyés dans le talon (20) et disposés de façon générale suivant des génératrices d'un cône ayant le même axe (X-X) que la garniture et qui convergent en direction du corps (19), chaque insert faisant saillie hors de la garniture (5) vers l'axe de celle-ci, la tête (24) ou partie radialement extérieure de chaque insert (18) présentant, du côté du corps (19), un bec de retenue de l'insert lors de l'enfoncement du bout mâle dans l'emboîtement, ce bec étant à arête vive (30) et étant délimité par deux surfaces dégagées (29, 31),
caractérisé en ce que l'arête vive (30) est immédiatement suivie d 'une partie radialement intérieure (31) en large arrondi concave qui permet à l'insert (18), lorsque le bout mâle (1) est introduit à force dans l'emboîtement (3) en comprimant radialement le corps de la garniture (5) et en amenant l'arête vive (30) au contact de la paroi avant (15) avec laquelle elle forme une liaison (30 ; 15), de pivoter autour de cette liaison (30 ; 15) tout en la maintenant, ladite liaison (30 ; 15) formant une butée franche qui empêche l'insert (18) d'être extrudé hors de la gorge (8) de l'emboîtement.

2. Assemblage suivant la revendication 1, caractérisé en ce que les deux surfaces dégagées (29, 31) forment un angle saillant dirigé vers la paroi avant (15) pour tout diamètre du bout mâle (1) compris dans sa gamme de tolérance et pour toute position d'introduction du bout mâle dans l'emboîtement.

3. Assemblage suivant la revendication 1 ou 2, caractérisé en ce que ledit angle est nettement inférieur à 90°.

4. Assemblage suivant la revendication 1 ou 2, caractérisé en ce que ledit angle est légèrement supérieur à 90°.

5. Assemblage suivant l'une quelconque des revendications 1 à 4, caractérisé en ce que, pour tout diamètre du bout mâle (1) compris dans sa gamme de tolérance et pour toute position d'introduction du bout mâle dans l'emboîtement, l'angle (α) que forme la surface dégagée extérieure (29) avec ladite paroi avant (15) est inférieur à l'angle (β) que forme avec cette dernière l'autre surface dégagée (31).

6. Assemblage suivant l'une quelconque des revendications 1 à 5, caractérisé en ce que la tête (24) de chaque insert (18) présente, du côté opposé au bec (29 à 31), une surface (26) inclinée radialement vers l'intérieur et axialement vers l'extérieur de l'emboîtement, cette surface se terminant de préférence par des arrondis (28, 33).

7. Assemblage suivant l'une quelconque des revendications 1 à 6, caractérisé en ce que la partie radialement intérieure (25) de chaque insert (18) est adaptée pour venir en prise de verrouillage sur la périphérie du bout mâle avec sa tête (24) en appui sur le fond (14) de la gorge (8) et éventuellement sur sa paroi de butée (12-13) située du côté d'entrée de l'emboîtement.

8. Assemblage suivant la revendication 7, caractérisé en ce que la garniture (5) est conforme à la revendication 6 et la paroi de butée (12-13) de l'emboîtement (3) située du côté de son entrée présente une partie radialement extérieure (13) tronconique, de sorte que la tête (24) des inserts (18) prend appui à peu près sur le raccordement de cette partie (13) et du fond (14) de la gorge (8) pour les grands diamètres du bout mâle (1) tandis qu'elle prend appui sur ce fond (14) et sur la même partie inclinée (13) pour les petits diamètres du bout mâle.

9. Assemblage suivant l'une quelconque des revendications 1 à 8, caractérisé en ce que chaque insert (18) présente plusieurs dents (35) d'accrochage sur le bout mâle (1), décalées axialement et radialement les unes par rapport aux autres.

10. Assemblage suivant l'une quelconque des revendications 1 à 9, caractérisé en ce que la garniture (5) comporte, du côté de l'entrée de l'emboîtement (3), une lèvre d'étanchéité intérieure (21) sensiblement radiale.

## Patentansprüche

1. Verriegelte Verbindung zwischen einem ersten Rohr (2) mit Einsteckende (1) und einem zweiten Rohr (4) mit Aufsteckteil (3), bei der eine ringförmige Dichtung (5) zwischen die beiden Rohre gesetzt ist, welche Dichtung (5) eine Achse (X-X) aufweist, die mit der Achse der Verbindung zusammenfällt, und umfassend:
- einen Körper (19) aus elastischem Material, der radial zwischen dem Aufsteckteil (3) und dem Einsteckende (1) komprimiert wird;
- einen Befestigungsansatz (20) aus elastischem Material, der sich in einer Befestigungsauskehlung (8) des Aufsteckteils befindet, die von einem Boden (14) begrenzt wird, der von zwei Anschlagwänden (12-13, 15) eingefaßt ist, und zwar einer hinteren Wand (12-13), die sich auf der Seite des Eingangs des Aufsteckteils (3) befindet und einer im wesentlichen radial angeordneten Vorderwand (15), die sich gegenüber der vorstehend genannten befindet;
- sowie mehrere Verriegelungseinsätze (18) aus starrem Material, die im Ansatz (20) versenkt und im wesentlichen entlang von Erzeugenden eines Konus angeordnet sind, der die gleiche Achse (X-X) hat wie die Dichtung, und die in Richtung des Körpers (19) zusammenlaufen, wobei jeder Einsatz (18) aus der Dichtung (5) zur Achse derselben hin hervorsteht und der Kopf (24) oder radial außen befindliche Teil jedes Einsatzes (18) auf der Seite des Körpers (19) eine Rückhaltenase für den Einsatz beim Eindrücken des Einsteckendes in den Aufsteckteil aufweist, wobei diese Nase eine scharfe Kante (30) aufweist und von zwei freiliegenden Flächen (29, 31) begrenzt ist,
dadurch gekennzeichnet, daß direkt an die scharfe Kante (30) ein radial innerer, breit konkav gerundeter Teil (31) anschließt, der dem Einsatz (18) ermöglicht, wenn das Einsteckende (1) in das Aufsteckteil (3) gedrückt wird, wobei der Körper der Dichtung (5) radial zusammengedrückt und die scharfe Kante (30) in Kontakt mit der Vorderwand (15) gebracht wird, mit der sie eine Verbindung (30; 15) bildet, um diese Verbindung (30; 15) zu schwenken und diese hält, wobei diese Verbindung einen offenen Anschlag bildet, der verhindert, daß der Einsatz (18) aus der Auskehlung (8) des Aufsteckteils herausgedrückt wird.

2. Verbindung nach Anspruch 1, dadurch gekennzeichnet, daß die beiden freiliegenden Flächen (29, 31) einen zur Vorderwand (15) des Aufsteckteils vorspringenden Winkel für jeden Durchmesser des Einsteckendes (1) bilden, der in dessen Toleranzbereich enthalten ist, und für jede Einführungsposition des Einsteckendes in das Aufsteckteil.

3. Verbindung nach Anspruch 1 oder 2, dadurch gekennzeichnet, daß der Winkel deutlich kleiner ist als 90°.

4. Verbindung nach Anspruch 1 oder 2, dadurch gekennzeichnet, daß der Winkel etwas größer als 90° ist.

5. Verbindung nach einem der Ansprüche 1 bis 4, dadurch gekennzeichnet, daß für jeden Durchmesser des Einsteckendes (1), der in seinem Toleranzbereich enthalten ist, und für jede Einführungsposition des Einsteckendes in den Aufsteckteil der Winkel (α), den die äußere freiliegende Fläche (29) mit der Vorderwand (15) bildet, kleiner ist als der Winkel (β), den die andere freiliegende Fläche (31) mit letzterer bildet.

6. Verbindung nach einem der Ansprüche 1 bis 5, dadurch gekennzeichnet, daß der Kopf (24) jedes Einsatzes (18) auf der der Nase (29 bis 31) abgewandten Seite eine radial nach innerhalb und axial nach außerhalb des Aufsteckteils geneigte Fläche (26) aufweist, die vorzugsweise in Rundungen (28, 33) endet.

7. Verbindung nach einem der Ansprüche 1 bis 6, dadurch gekennzeichnet, daß der radial innere Teil (25) jedes Einsatzes (18) geeignet ist, in Verriegelungseingriff zum Umfang des Einsteckendes zu kommen, wobei er mit seinem Kopf (24) an den Boden (14) der Auskehlung (8) und eventuell an seine Anschlagwand (12-13) anliegt, die sich auf der Eingangsseite des Aufsteckteils befindet.

8. Verbindung nach Anspruch 7, dadurch gekennzeichnet, daß die Dichtung (5) dem Anspruch 6 entspricht, und die Anschlagwand (12-13) des Aufsteckteils (3), die auf der Seite seines Eingangs liegt, einen radial äußeren, kegelstumpfförmigen Teil (13) umfaßt, so daß der Kopf (24) der Einsätze (18) bei großen Durchmessern des Einsteckendes (1) in etwa an der Verbindung dieses Teils (13) und des Bodens (14) der Auskehlung (8) anliegt, während er bei kleinen Durchmessern des Einsteckendes an diesen Boden (14) und den gleichen geneigten Teil (13) anliegt.

9. Verbindung nach einem der Ansprüche 1 bis 8, dadurch gekennzeichnet, daß jeder Einsatz (18) mehrere Zacken (35) zur Befestigung an dem Einsteckende (1) aufweist, die axial und radial voneinander beabstandet sind.

10. Verbindung nach einem der Ansprüche 1 bis 9, dadurch gekennzeichnet, daß die Dichtung (5) auf der Seite des Eingangs des Aufsteckteils (3) eine im wesentlihcen radiale innere Dichtlippe (21) aufweist.

## Claims

1. Locked assembly between a first pipe (2) with a male end (1) and a second pipe (4) with a socket (3) with the interposition of an annular seal (5) between the two pipes, the said seal (5) exhibiting an axis (X-X) which is coincident with the axis of the assembly and comprising:
- a body (19) made of elastic material, compressed radially between the socket (3) and the male end (1);
- an anchoring heel (20) made of elastic material, housed in an anchoring groove (8) of the socket delimited by a bottom (14) bordered by two stop walls (12-13, 15), namely a rear wall (12-13) situated on the entry side of the socket (3) and a more or less radial front wall (15) situated facing the previous one;
- and several locking inserts (18) made of a rigid material embedded in the heel (20) and located generally along generatrices of a cone having the same axis (X-X) as the seal and which converge in the direction of the body (19), each insert projecting out of the seal (5) towards the axis of the latter, the head (24) or radially outer part of each insert (18) exhibiting, on the same side as the body (19), a hook for holding the insert while the male end is being pushed into the socket, this hook having a sharp edge (30) and being delimited by two undercut surfaces (29, 31),
characterized in that the sharp edge (30) is immediately followed by a radially inner part (31) with a deeply concave rounded portion which allows the insert (18), when the male end (1) is forcibly introduced into the socket (3), radially compressing the body of the seal (5) and bringing the sharp edge (30) into contact with the front wall (15) with which it forms a connection (30; 15), to pivot about this connection (30; 15) while maintaining it, the said connection (30; 15) forming a distinct stop which prevents the insert (18) from being extruded out of the groove (8) of the socket.

2. Assembly according to Claim 1, characterized in that the two undercut surfaces (29, 31) form a projecting angle directed towards the front wall (15) for any diameter of the male end (1) lying within its tolerance band and for any position of insertion of the male end into the socket.

3. Assembly according to Claim 1 or 2, characterized in that the said angle is markedly less than 90°.

4. Assembly according to Claim 1 or 2, characterized in that the said angle is slightly greater than 90°.

5. Assembly according to any one of Claims 1 to 4, characterized in that, for any diameter of the male end (1) lying within its tolerance band and for any position of insertion of the male end into the socket, the angle (α) that the outer undercut surface (29) forms with the said front wall (15) is less than the angle (β) that the other undercut surface (31) forms with this front wall.

6. Assembly according to any one of Claims 1 to 5, characterized in that the head (24) of each insert (18) exhibits, on the opposite side from the hook (29 to 31), a surface (26) which is inclined radially towards the inside and axially towards the outside of the socket, this surface preferably ending in rounded portions (28, 33).

7. Assembly according to any one of Claims 1 to 6, characterized in that the radially inner part (25) of each insert (18) is designed to come into locking engagement with the periphery of the male end with its head (24) bearing against the bottom (14) of the groove (8) and possibly on its stop wall (12-13) situated on the entry side of the socket.

8. Assembly according to Claim 7, characterized in that the seal (5) complies with Claim 6, and the stop wall (12-13) of the socket (3) situated on its entry side exhibits a frustoconical radially outer part (13) so that the head (24) of the inserts (18) bears more or less on the join between this part (13) and the bottom (14) of the groove (8) for large diameters of the male end (1) whereas it bears on this bottom (14) and on the same inclined part (13) for small diameters of the male end.

9. Assembly according to any one of Claims 1 to 8, characterized in that each insert (18) exhibits several teeth (35) for catching on the male end (1), these teeth being offset from one another axially and radially.

10. Assembly according to any one of Claims 1 to 9, characterized in that the seal (5) includes a substantially radial inner sealing lip (21) on the entry side of the socket (3).
